# EUROPÄISCHE PATENTSCHRIFT

(11) **EP 2 640 544 B1**
(45) Veröffentlichungstag und Bekanntmachung des Hinweises auf die Patenterteilung: **19.03.2014**
(21) Anmeldenummer: 12721697.6
(22) Anmeldetag: 25.04.2012
(51) Int. Cl.: B23K 9/12, B23K 9/133

(54) **VERFAHREN ZUM ERMITTELN DES ANPRESSDRUCK-SOLLWERTS FÜR DIE FÖRDERUNG EINES SCHWEISSDRAHTS IN EINER SCHWEISSVORRICHTUNG, UND ENTSPRECHENDE SCHWEISSVORRICHTUNG**
METHOD OF DETERMINING THE SETPOINT CONTACT PRESSURE VALUE FOR CONVEYING A WELDING WIRE IN A WELDING DEVICE, AND CORRESPONDING WELDING DEVICE
PROCÉDÉ DE DÉTERMINATION D'UNE VALEUR THÉORIQUE DE PRESSION D'APPUI POUR LE TRANSPORT D'UN FIL D'APPORT DANS UN DISPOSITIF DE SOUDAGE, ET DISPOSITIF DE SOUDAGE CORRESPONDANT

(30) Priorität: 27.05.2011 AT 7752011
(43) Veröffentlichungstag der Anmeldung: 25.09.2013
(73) Patentinhaber: Fronius International GmbH, 4643 Pettenbach (AT)
(72) Erfinder: STUMPFL, Christian, A-4715 Taufkirchen (AT); HUMMELBRUNNER, Andreas, A-4551 Ried im Traunkreis (AT)
(74) Vertreter: Sonn & Partner Patentanwälte
(86) Internationale Anmeldenummer: PCT/AT2012/000111
(87) Internationale Veröffentlichungsnummer: WO 2012/162709

(56) Entgegenhaltungen:
- JP-A- 2001 150 134
- JP-A- 2010 099 677
- US-A1- 2008 296 278

## Beschreibung

Die Erfindung betrifft ein Verfahren zum Ermitteln eines Sollwerts für den Anpressdruck von Förderrollen zumindest einer Vorrichtung zur Förderung eines Schweißdrahts einer Schweißvorrichtung, wobei der Sollwert des Anpressdrucks in Abhängigkeit festgelegter Parameter empirisch oder rechnerisch ermittelt und an der zumindest einen Fördervorrichtung eingestellt wird (siehe Anspruch 1).

Die Erfindung betrifft weiters eine Schweißvorrichtung mit zumindest einer Förderrollen umfassenden Vorrichtung zur Förderung eines Schweißdrahts, wobei ein Sollwert des Anpressdrucks der Förderrollen jeder Fördervorrichtung in Abhängigkeit festgelegter Parameter empirisch oder rechnerisch ermittelbar und an der zumindest einen Fördervorrichtung einstellbar ist (siehe Anspruch 8) siehe JP 2010/099677 für die beiden Aspekte.

Bei Schweißverfahren mit abschmelzendem Schweißdraht wird dieser von einem Drahtvorrat, beispielsweise einer Drahtrolle oder einer Drahttrommel, über entsprechende Fördervorrichtungen zum Schweißbrenner gefördert, um dort eine entsprechende Schweißnaht zur Verbindung zweier Werkstücke bilden zu können. Zur Förderung des Schweißdrahts werden üblicherweise zwei Förderrollen verwendet, zwischen welchen der Schweißdraht eingeklemmt wird. Zumindest eine der Förderrollen ist angetrieben. Üblicherweise ist an den Förderrollen eine entsprechende Nut zur Aufnahme des Schweißdrahts vorgesehen. Die Form der Nut kann in Abhängigkeit des Materials des Schweißdrahts verschiedenartig, beispielsweise trapezförmig oder halbrund, ausgebildet sein. Je nach Schweißverfahren kann die Anzahl und Anordnung der Fördervorrichtungen variieren. Beispielsweise kann nur im Schweißbrenner oder nur im Bereich des Drahtvorrats jeweils eine Fördervorrichtung oder auch sowohl im Schweißbrenner als auch im Bereich des Drahtvorrats und allenfalls auch dazwischen eine Fördervorrichtung für den Transport des Schweißdrahts angeordnet sein. Insbesondere bei modernen Schweißverfahren, wie zum Beispiel dem CMT (Cold Metal Transfer)-Schweißverfahren, bei welchen auch zeitweise ein Transport des Schweißdrahts entgegen der normalen Richtung zum Werkstück erfolgt, sind mehrere Fördervorrichtungen je Schweißvorrichtung üblich.

Für eine optimale Förderung des Schweißdrahts ist es erforderlich den Druck, mit welchem der Schweißdraht zwischen den Förderrollen der Fördervorrichtung geklemmt wird, entsprechend einzustellen. Je nach Material und Durchmesser des Schweißdrahts aber auch Beschaffenheit der Förderrollen der Fördervorrichtung existieren optimale Sollwerte für den Anpressdruck. Wird der Anpressdruck zu gering gewählt, kann der Schweißdraht zwischen den Förderrollen durchrutschen und nicht mit der gewünschten Geschwindigkeit zur Schweißstelle transportiert werden. Dadurch kann der Fall eintreten, dass zu wenig Schweißdraht an die Schweißstelle gefördert wird. In der Folge kann es zu Veränderungen der Lichtbogenlänge und somit zu einer Verschlechterung der Schweißqualität kommen. Im Falle eines zu hohen Anpressdrucks kann es zu einer unzulässigen Verformung des Schweißdrahts und in der Folge wiederum zu Problemen beim Transport des Schweißdrahts und der Schweißung kommen.

Die AT 007 924 U1 beschreibt beispielsweise eine Antriebseinheit zum Fördern eines Schweißdrahts, wobei der Schweißdraht im Bereich des Schweißbrenners zwischen zwei Förderrollen geklemmt wird und bei Antrieb einer Förderrolle, der so genannten Antriebsrolle, eine Bewegung des Schweißdrahts erzielt wird.

Die EP 1 755 817 B1 zeigt eine im Schweißbrenner integrierte Vorrichtung zur Förderung des Schweißdrahts, wobei zur Anpassung des Anpressdrucks an das Material und den Durchmesser des Schweißdrahts ein elastisch oder plastisch verformbares Druckmittel vorgesehen ist, durch welches eine Förderrolle entsprechend verstellt werden kann, um eine Anpassung des Anpressdrucks an den jeweiligen Schweißdraht vornehmen zu können.

Üblicherweise erfolgt die Auswahl und Einstellung des Sollwerts des Anpressdrucks anhand von Tabellen mit empirisch ermittelten Sollwerten für den Anpressdruck in Abhängigkeit festgelegter Parameter, wie dem Schweißdrahtmaterial, dem Schweißdrahtdurchmesser und allenfalls der Art der Förderrollen, wie zum Beispiel der Form und Oberflächenbeschaffenheit der Nut der Förderrollen. Die entsprechenden Sollwerte für den Anpressdruck werden für sämtliche Parameterkombinationen empirisch ermittelt und in den entsprechenden Tabellen eingetragen. Der Schweißer wählt dann anhand der Tabellen für die von ihm mit einem bestimmten Schweißdraht auszuführende Schweißung den idealen Sollwert für den Anpressdruck aus und stellt diesen manuell an der Fördervorrichtung ein. Zu diesem Zweck befindet sich beispielsweise ein Stellrad mit einer entsprechenden Skala an der Fördervorrichtung, das entsprechend verdreht wird, bis der Wert an der Skala mit dem Tabellenwert für den Sollwert des Anpressdrucks übereinstimmt. Zur Vereinfachung wird üblicherweise nicht der Anpressdruck selbst sondern ein vorzugsweise einstelliger Zahlenwert, der dem entsprechenden Anpressdruck entspricht, gewählt. Hierzu ist meist an der Fördervorrichtung, insbesondere auf einem Deckel der Fördervorrichtung, eine entsprechende Tabelle für übliche Schweißeigenschaften bzw. für jene Schweißeigenschaft, für die das Schweißgerät ausgelegt ist, eingeklebt. Weitere Tabellen muss der Benutzer aus der Beschreibung oder anderen Quellen, beispielsweise dem Internet, entnehmen.

Abgesehen vom hohen Aufwand für das Auswählen und Einstellen des Anpressdrucks sind herkömmliche Verfahren auch sehr anfällig auf Fehleinstellungen durch den Schweißer.

Aufgabe der vorliegenden Erfindung ist daher die Vereinfachung und Verbesserung der Ermittlung und Vorgabe des Sollwerts des Anpressdrucks der Förderrollen einer Vorrichtung zur Förderung eines Schweißdrahts einer Schweißvorrichtung, mit dem Ziel auch die Schweißqualität durch den optimal eingestellten Anpressdruck zu verbessern. Nachteile des Standes der Technik sollen möglichst vermieden oder zumindest reduziert werden.

Gelöst wird die erfindungsgemäße Aufgabe in verfahrensmäßiger Hinsicht dadurch, dass als Daten der festgelegten Parameter das Material und der Durchmesser des Schweißdrahts und allenfalls die Art der Förderrollen der Fördervorrichtung verwendet werden und diese zusammen mit Daten von zusätzlichen Parametern betreffend die Konfiguration der Schweißvorrichtung, nämlich die Anzahl und die Positionen der Fördervorrichtungen, die Art, Anzahl und Länge von Schlauchpaketen zur Führung des Schweißdrahts und/oder die Art der zumindest einen Fördervorrichtung, in einer Datenbank zusammen mit den jeweiligen empirisch ermittelten Sollwerten des Anpressdrucks oder einer Rechenvorschrift zur Berechnung der jeweiligen Sollwerte des Anpressdrucks gespeichert sind, und der Sollwert des Anpressdrucks jeder Fördervorrichtung in Abhängigkeit dieser festgelegten Parameter und zusätzlichen Konfigurationsparameter aus der Datenbank empirisch oder rechnerisch ermittelt und an zumindest einer Anzeige angezeigt wird. Dieses Verfahren zeichnet sich also dadurch aus, dass neben den bekannten Einflussparametern (Schweißdrahtmaterial, Schweißdrahtdurchmesser, Art der Förderrollen der Fördervorrichtung, etc.) weitere Einflussparameter, welche die Konfiguration der Schweißvorrichtung berücksichtigen, in einer Datenbank zusammen mit den jeweiligen optimalen Werten für den Anpressdruck der Förderrollen der Fördervorrichtungen abgelegt werden. Durch die Verwendung einer Datenbank anstelle von Tabellen oder Diagrammen können somit wesentlich mehr Einflussparameter für die Auswahl des optimalen Anpressdrucks herangezogen werden, wodurch die Einstellung noch besser auf die jeweiligen Gegebenheiten, insbesondere auch die Art der Konfiguration der Schweißvorrichtung, abgestimmt werden kann. Für jede Parameterkombination wird auch hier der optimale Anpressdruck jeder Fördervorrichtung empirisch, d.h. unter Laborbedingungen, ermittelt und gespeichert. Selbstverständlich kann auch eine entsprechende Rechenvorschrift zur Berechnung des Sollwerts des Anpressdrucks in Abhängigkeit sämtlicher Einflussparameter anstelle von Einzelwerten in der Datenbank abgelegt werden. Wie auch immer die Eingabe bzw. Auswahl der festgelegten Parameter und Konfigurationsparameter erfolgt, wird jedenfalls der Sollwert des Anpressdrucks der Förderrollen jeder Fördervorrichtung dem Schweißer angezeigt, worauf dieser die entsprechenden Einstellungen an den Fördervorrichtungen vornehmen kann. Durch die zusätzlichen Konfigurationsparameter wird auf die Vielzahl an Möglichkeiten von Konfigurationen der Schweißvorrichtung Rücksicht genommen und somit eine bessere Auswahl des jeweiligen optimalen Anpressdrucks erzielt. Auch wird durch das Verfahren die Wahrscheinlichkeit von Fehleinstellungen aufgrund falscher Zuordnungen in den Tabellen oder Diagrammen verringert, da der Schweißer im Wesentlichen die aktuelle Konfiguration der Anwendung einstellt. Bei gleich bleibender Anzahl der Anwendungen entfallen somit die unterschiedlichen Tabellen und/oder Diagramme pro Anwendung. Die entsprechenden Daten der Datenbank können auch relativ rasch und einfach aktualisiert bzw. an neue Gegebenheiten angepasst und erweitert werden. Die Anzeige des Sollwerts des Anpressdrucks jeder Fördervorrichtung bzw. eines entsprechenden äquivalenten Zahlenwerts kann auf einer oder mehreren Anzeigen erfolgen. Vorzugsweise befindet sich die Anzeige für den Sollwert des Anpressdrucks in unmittelbarer Nähe der jeweiligen Fördervorrichtung, an der die Einstellung des Anpressdrucks vorgenommen wird. Natürlich kann auch bei mehreren Fördervorrichtungen auch nur eine Anzeige angeordnet sein, an welcher die Sollwerte für den Anpressdruck sämtlicher Fördervorrichtungen, beispielsweise hintereinander angezeigt werden. Ein wesentlicher Vorteil liegt auch darin, dass beim Ermitteln bzw. Anzeigen des Sollwerts für den Anpressdruck auch die tatsächlichen Istwerte des Anpressdrucks während einer Schweißung berücksichtigt werden können. Beispielsweise kann nach einer Schweißung der zuvor angezeigte Wert des Anpressdrucks auf Grund der aufgetretenen Istwerte des Anpressdrucks während der Schweißung geändert bzw. angepasst werden. Die Konfigurationsparameter sollen sämtliche Freiheitsgrade bei der Konfiguration der Schweißvorrichtung, die einen Einfluss auf die Auswahl des optimalen Anpressdrucks der Fördervorrichtung haben, enthalten. Beispielsweise hat die Länge des Schlauchpakets wesentlichen Einfluss darauf, welche Gegenkraft der Fördervorrichtung entgegengebracht wird, und mit welchem Anpressdruck der Schweißdraht somit gepresst werden muss, um eine optimale Förderung erzielen zu können. Als Art der Fördervorrichtung gilt beispielsweise ein Zweirollen- oder Vierrollen-Antrieb.

Die Daten der festgelegten Parameter und/oder Konfigurationsparameter können über eine Eingabevorrichtung eingegeben oder ausgewählt werden. Die Eingabevorrichtung, welche auch durch die üblicherweise vorhandene Ein-/Ausgabevorrichtung der Schweißvorrichtung gebildet sein kann, dient also dazu, die festgelegten Parameter (z.B. Schweißdrahtmaterial, Schweißdrahtdurchmesser, usw.) und die Konfigurationsparameter (z.B. Anzahl und Art der Fördervorrichtungen, Länge des Schlauchpakets, usw.) einzustellen bzw. auszuwählen, worauf der optimale Sollwert des Anpressdrucks jeder Fördervorrichtung aus der Datenbank automatisch ermittelt und dem Schweißer angezeigt wird.

Zusätzlich bzw. alternativ dazu können die Daten der festgelegten Parameter und/oder Konfigurationsparameter auch automatisch erkannt werden. Dadurch können Fehleinstellungen durch den Schweißer vermieden werden. Die automatische Erkennung der jeweiligen festgelegten Parameter und/oder Konfigurationsparameter kann auf verschiedenste Weise erfolgen. Beispielsweise können Schweißkomponenten eindeutige Identifikationen aufweisen, anhand derer die Konfigurationsparameter feststellbar sind. Werden diese automatisch an die Datenbank weitergeleitet, kann auch automatisch eine Auswahl des Sollwerts des Anpressdrucks der Fördervorrichtungen erfolgen.

Wenn gemäß einem weiteren Merkmal der Erfindung der ausgewählte Sollwert des Anpressdrucks jeder Fördervorrichtung in Abhängigkeit einer gemessenen Fördergeschwindigkeit des Schweißdrahts, beispielsweise eines gemessenen Motorstroms der Fördervorrichtung, korrigiert wird, kann auf einen Verschleiß, insbesondere der Förderrollen, Rücksicht genommen werden. Somit können über eine gewisse Zeitspanne trotz auftretendem Verschleiß weiterhin optimale Förderbedingungen erzielt werden. Beispielsweise sind Abweichungen vom üblichen Motorstrom des Antriebsmotors der Fördervorrichtung Anzeichen für einen Verschleiß der Förderrollen, weshalb der Motorstrom als Indikator für einen Verschleiß herangezogen werden kann.

Die Über- oder Unterschreitung von Schwellwerten der gemessenen Drahtfördergeschwindigkeit, beispielsweise des gemessenen Motorstroms der Fördervorrichtung, kann auch optisch oder akustisch angezeigt werden, um auf den Verschleiß der Fördervorrichtung hinzuweisen und dem Schweißer die Möglichkeit der Vorbereitung eines Austauschs der entsprechenden Schweißkomponenten, insbesondere Förderrollen, zu geben.

Eine weitere Verbesserung des Verfahrens kann dadurch erzielt werden, dass der Sollwert des Anpressdrucks jeder Fördervorrichtung automatisch eingestellt wird. Die automatische Einstellung kann beispielsweise durch entsprechende Schrittmotoren oder dergleichen erfolgen. Durch eine solche automatische Einstellung können Fehleinstellungen durch den Schweißer ausgeschlossen werden.

Der Sollwert des Anpressdrucks jeder Fördervorrichtung wird vorzugsweise in Form eines Werts zwischen 0 und 9 an der zumindest einen Anzeige angezeigt. Dies vereinfacht die manuelle Einstellung des Anpressdrucks und ermöglicht zudem eine Anpassung an bereits vorhandenen Fördervorrichtungen mit vorgegebenen Skalen für das Einstellorgan zur Einstellung des Anpressdrucks. Darüber hinaus ist bei einer einstelligen Anzeige des Sollwerts des Anpressdrucks auch nur eine entsprechende Anzeige, beispielsweise Siebensegmentanzeige, erforderlich.

Gelöst wird die erfindungsgemäße Aufgabe auch durch eine oben genannte Schweißvorrichtung, wobei eine Datenbank zur Speicherung von Daten der festgelegten Parameter, nämlich dem Material und dem Durchmesser des Schweißdrahts und allenfalls der Art der Förderrollen der Fördervorrichtung zusammen mit Daten von zusätzlichen Parametern betreffend die Konfiguration der Schweißvorrichtung, nämlich der Anzahl und der Positionen der Fördervorrichtungen, der Art, Anzahl und Länge von Schlauchpaketen zur Führung des Schweißdrahts, und/oder der Art der zumindest einen Fördervorrichtung zusammen mit den jeweiligen empirisch ermittelten Sollwerten des Anpressdrucks oder einer Rechenvorschrift zur Berechnung der jeweiligen Sollwerte des Anpressdrucks vorgesehen ist, und zumindest eine Anzeige für den empirisch oder rechnerisch ermittelten Sollwert des Anpressdrucks jeder Fördervorrichtung vorgesehen ist. Zu den dadurch erzielten Vorteilen wird auf die obige Beschreibung zum Verfahren zur Ermittlung des Sollwerts für den Anpressdruck verwiesen.

Vorzugsweise ist eine mit der Datenbank verbundene Eingabevorrichtung zur Eingabe oder Auswahl der Daten der festgelegten bzw. bekannten Einflussparameter und/oder Konfigurationsparameter vorgesehen. Wie bereits oben erwähnt kann diese Eingabevorrichtung durch die bereits vorhandene Ein-/Ausgabevorrichtung des Schweißgeräts oder eine eigene Tastatur bzw. einen Touchscreen oder dergleichen gebildet sein, durch welchen die Eingabe oder Auswahl der Daten der entsprechenden Parameter ermöglicht wird.

Wenn eine mit der Datenbank verbundene Vorrichtung zur automatischen Erkennung der Daten der festgelegten Parameter und/oder Konfigurationsparameter vorgesehen ist, kann eine manuelle Auswahl der Daten der festgelegten Parameter und/oder Konfigurationsparameter zumindest teilweise entfallen und somit die Ermittlung des Sollwerts des Anpressdrucks noch weiter vereinfacht werden.

Beispielsweise kann die Erkennungsvorrichtung durch einen Barcode-Leser gebildet sein. Somit kann beispielsweise das Material und der Durchmesser des Schweißdrahts in Form eines Barcodes am Drahtvorrat enthalten sein. Mit Hilfe eines Barcode-Lesers können die entsprechenden Daten an die Datenbank weitergeleitet werden. Anstelle von Barcodes können natürlich auch andere beliebige Codes oder in einem RFID (Radio Frequency Identification)-Etikett enthaltene Codes zur Festlegung der Parameterdaten und entsprechende Geräte zum Auslesen dieser Codes vorgesehen sein. Die Konfiguration der Schweißvorrichtung kann auch über eine Netzwerkverbindung, insbesondere Ethernet-Verbindung, erfolgen, mit welcher die einzelnen Komponenten der Schweißvorrichtung (Fördervorrichtung, Schweißgerät, Schweißbrenner, ...) untereinander und/oder mit dem Schweißgerät verbunden sind.

Wenn eine mit der Datenbank verbundene Einrichtung zur Messung der Geschwindigkeit des Schweißdrahts, beispielsweise eine Einrichtung zur Messung des Motorstroms der Fördervorrichtung, vorgesehen ist, können die Istwerte der Schweißdraht-Förderung berücksichtigt und somit eine Regelung hergestellt werden. Auf diese Weise kann auf einen Verschleiß der Fördervorrichtung Rücksicht genommen werden und der entsprechende Sollwert des Anpressdrucks in Abhängigkeit des Verschleißes korrigiert werden.

Über eine optische oder akustische Anzeigevorrichtung kann die Über- oder Unterschreitung von Schwellwerten der gemessenen Drahtfördergeschwindigkeit, beispielsweise des gemessenen Motorstroms, erfolgen, um den Schweißer auf den Verschleiß der Fördervorrichtung hinzuweisen. Die optische oder akustische Anzeigevorrichtung muss nicht gezwungenermaßen am Schweißgerät selbst enthalten sein sondern kann auch über entsprechende Methoden an einen anderen Ort, beispielsweise eine Schweißzentrale, übermittelt werden.

Wenn jede Fördervorrichtung eine Einrichtung zur automatischen Einstellung des Anpressdrucks aufweist, können Fehleinstellungen durch den Schweißer verhindert werden.

Wenn die Datenbank mit einer entsprechenden Schnittstelle verbunden ist, können die Daten der Datenbank einfach auch aus der Ferne aktualisiert oder ergänzt werden. Bei Schnittstellen eignen sich insbesondere gängige Schnittstellen, wie zum Beispiel Schnittstellen zu einem Netzwerk, insbesondere dem Internet, besonders.

Wenn jede Anzeige für den Sollwert des Anpressdrucks jeder Fördervorrichtung durch eine einstellige Siebensegmentanzeige gebildet ist, kann die Vorrichtung sehr kostengünstig und platzsparend ausgeführt werden. Auf diese Weise kann die Anzeige beispielsweise auch auf dem relativ kleinen Schweißbrenner untergebracht werden.

Die vorliegende Erfindung wird anhand der beigefügten, schematischen Zeichnungen näher erläutert. Darin zeigen:
- Fig. 1: eine schematische Darstellung einer Schweißvorrichtung;
- Fig. 2: eine schematische Ansicht einer Schweißvorrichtung mit der erfindungsgemäßen Ermittlung des Sollwerts für den Anpressdruck der Förderrollen;
- Fig. 3: eine schematische Ausführungsform einer Fördervorrichtung; und
- Fig. 4: eine schematische Ansicht des Verfahrens zum Ermitteln des Sollwerts des Anpressdrucks der Fördervorrichtung einer Schweißvorrichtung.

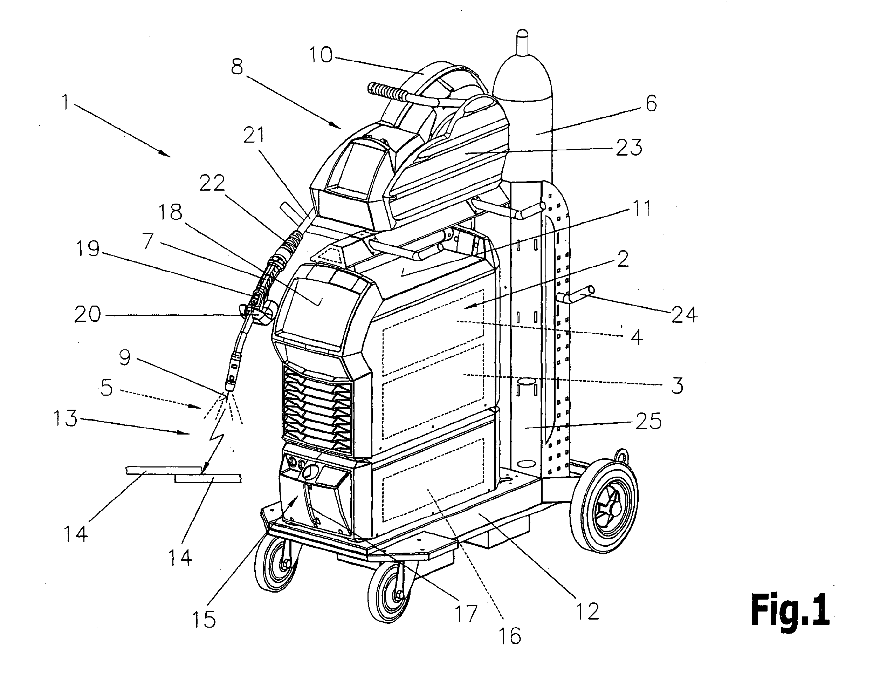

In Fig. 1 ist eine Schweißvorrichtung 1 für verschiedenste Prozesse bzw. Verfahren, wie z.B. MIG/MAG-, WIG/TIG-, Elektroden-, Doppeldraht/Tandem-Schweißverfahren, Plasma- oder Lötverfahren usw., gezeigt.

Die Schweißvorrichtung 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventile, usw.. Die Steuervorrichtung 4 ist beispielsweise mit einem Steuerventil verbunden, welches in einer Versorgungsleitung für ein Gas 5, insbesondere ein Schutzgas, wie beispielsweise CO₂, Helium oder Argon und dergl., zwischen einem Gasspeicher 6 und einem Schweißbrenner 7 angeordnet ist.

Zudem kann über die Steuervorrichtung 4 noch eine Vorrichtung 8 zur Förderung eines Schweißdrahts 9 von einer Vorratstrommel 10 bzw. einer Drahtrolle in den Bereich des Schweißbrenners 7 angesteuert werden, wie es beispielsweise für das MIG/MAG-Schweißen üblich ist. Selbstverständlich kann die Fördervorrichtung 8 auch in der Schweißvorrichtung 1, insbesondere im Gehäuse 11 der Stromquelle 2, integriert und nicht, wie in Fig. 1 dargestellt, als Zusatzgerät auf einem Fahrwagen 12 positioniert sein. Die Fördervorrichtung 8 für den Schweißdraht 9 kann auch direkt auf der Schweißvorrichtung 1 aufgesetzt werden, wobei das Gehäuse 11 der Stromquelle 2 an der Oberseite zur Aufnahme der Fördervorrichtung 8 ausgebildet ist, und der Fahrwagen 12 entfallen kann.

Der Schweißdraht 9 kann von einer Fördervorrichtung 8 auch außerhalb des Schweißbrenners 7 an die Prozessstelle zugeführt werden, wobei im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13, insbesondere eines Arbeitslichtbogens, zwischen der Elektrode bzw. dem Schweißdraht 9 und einem aus einem oder mehreren Teilen gebildeten Werkstück 14 wird über eine Schweißleitung (nicht dargestellt) vom Leistungsteil 3 der Stromquelle 2, dem Schweißbrenner 7, insbesondere der Elektrode bzw. dem Schweißdraht 9, zugeführt. Das zu verschweißende Werkstück 14 wird über eine weitere Schweißleitung (nicht dargestellt) für das weitere Potential, insbesondere ein Masse-Kabel, mit der Stromquelle 2 verbunden, wodurch über den Lichtbogen 13 bzw. einem gebildeten Plasmastrahl ein Stromkreis für einen Prozess aufgebaut werden kann. Bei Verwendung eines Brenners mit internem Lichtbogen 13 ((nicht dargestellt) wie dies bei einem Plasma-Brenner der Fall sein kann) werden die beiden Schweißleitungen zum Brenner geführt, sodass im Brenner ein entsprechender Stromkreis aufgebaut werden kann (nicht dargestellt).

Zum Kühlen des Schweißbrenners 7 wird dieser über ein Kühlgerät 15 unter Zwischenschaltung allfälliger Komponenten, wie beispielsweise einem Strömungswächter, mit einem Flüssigkeitsbehälter, insbesondere einem Wasserbehälter 16 mit einer Füllstandsanzeige 17, verbunden. Bei Inbetriebnahme des Schweißbrenners 7 wird das Kühlgerät 15, insbesondere eine für die im Wasserbehälter 16 angeordnete Flüssigkeit verwendete Flüssigkeitspumpe, gestartet, wodurch eine Kühlung des Schweißbrenners 7 bewirkt wird. Wie bei dem dargestellten Ausführungsbeispiel gezeigt, wird das Kühlgerät 15 auf den Fahrwagen 12 positioniert, auf das anschließend die Stromquelle 2 gestellt wird. Die einzelnen Komponenten der Schweißvorrichtung 1, also die Stromquelle 2, das Drahtvorschubgerät 8 und das Kühlgerät 15, sind dabei derart ausgebildet, dass diese entsprechende Vorsprünge bzw. Ausnehmungen aufweisen, sodass sie sicher aufeinander gestapelt bzw. aufeinander gestellt werden können.

Die Schweißvorrichtung 1, insbesondere die Stromquelle 2, weist weiters eine Ein- und/oder Ausgabevorrichtung 18 auf, über welche die unterschiedlichsten Schweißparameter, Betriebsarten oder Schweißprogramme des Schweißgerätes 1 eingestellt bzw. aufgerufen und angezeigt werden können. Die über die Ein- und/oder Ausgabevorrichtung 18 eingestellten Schweißparameter, Betriebsarten oder Schweißprogramme werden an die Steuervorrichtung 4 weitergeleitet und von dieser anschließend die einzelnen Komponenten der Schweißvorrichtung 1 angesteuert bzw. entsprechende Sollwerte für die Regelung oder Steuerung vorgegeben. Bei Verwendung eines entsprechenden Schweißbrenners 7 können auch Einstellvorgänge über den Schweißbrenner 7 vorgenommen werden, wozu der Schweißbrenner 7 mit einer Schweißbrenner-Ein- und/oder Ausgabevorrichtung 19 ausgestattet ist. Bevorzugt ist dabei der Schweißbrenner 7 über einen Datenbus, insbesondere einen seriellen Datenbus, mit der Schweißvorrichtung 1, insbesondere der Stromquelle 2 oder der Fördervorrichtung 8 verbunden. Zum Starten des Schweißprozesses weist der Schweißbrenner 7 meist einen Startschalter (nicht dargestellt) auf, durch dessen Betätigung der Lichtbogen 13 gezündet werden kann. Um gegen die vom Lichtbogen 13 ausgehende Hitzestrahlung geschützt zu werden, kann der Schweißbrenner 7 mit einem Hitzeschutzschild 20 ausgestattet werden.

Beim dargestellten Ausführungsbeispiel ist der Schweißbrenner 7 über ein Schlauchpaket 21 mit der Schweißvorrichtung 1 verbunden, wobei das Schlauchpaket 21 über einen Knickschutz 22 am Schweißbrenner 7 befestigt sein kann. Im Schlauchpaket 21 sind die einzelnen Leitungen, wie beispielsweise die Versorgungsleitung, Leitungen für den Schweißdraht 9, das Gas 5, den Kühlkreislauf, die Datenübertragung, usw., von der Schweißvorrichtung 1 zum Schweißbrenner 7 angeordnet, wogegen das Masse-Kabel bevorzugt gesondert an der Stromquelle 2 angeschlossen wird. Das Schlauchpaket 21 wird vorzugsweise über eine nicht dargestellte Kupplungsvorrichtung an der Stromquelle 2 oder der Fördervorrichtung 8 angeschlossen, wogegen die einzelnen Leitungen im Schlauchpaket 21 mit einem Knickschutz am bzw. im Schweißbrenner 7 befestigt sind. Damit eine entsprechende Zugentlastung des Schlauchpakets 21 gewährleistet ist, kann das Schlauchpaket 21 über eine Zugentlastungsvorrichtung mit dem Gehäuse 11 der Stromquelle 2 oder der Fördervorrichtung 8 verbunden sein (nicht dargestellt).

Grundsätzlich müssen für die unterschiedlichen Schweißverfahren bzw. Schweißvorrichtungen 1, wie beispielsweise WIG-Geräte, MIG/MAG-Geräte oder Plasmageräte, nicht alle zuvor benannten Komponenten verwendet bzw. eingesetzt werden. Der Schweißbrenner 7 kann auch als luftgekühlter Schweißbrenner 7 ausgeführt werden und das Kühlgerät 15 entfallen. Die Schweißvorrichtung 1 wird zumindest durch die Stromquelle 2, die Fördervorrichtung 8 und allenfalls das Kühlgerät 15 gebildet, wobei diese Komponenten auch in einem gemeinsamen Gehäuse 11 angeordnet sein können. Es können noch weitere Teile bzw. Komponenten, wie beispielsweise ein Schleifschutz 23 am Drahtvorschubgerät 8 oder ein Optionsträger 24 an einer Haltevorrichtung 25 für den Gasspeicher 6 usw., angeordnet werden.

Die in Fig. 1 dargestellte Ausführungsform einer Schweißvorrichtung 1 stellt nur eine von vielen Möglichkeiten dar. Insbesondere können die Schweißvorrichtungen 1 hinsichtlich der Zuführung des Schweißdrahts 9, der Länge des Schlauchpakets 21, der Art, Position und Anzahl von Fördervorrichtungen 8 für den Schweißdraht 9, dem Vorhandensein eines Drahtpuffers (nicht dargestellt) und vielem mehr variieren.

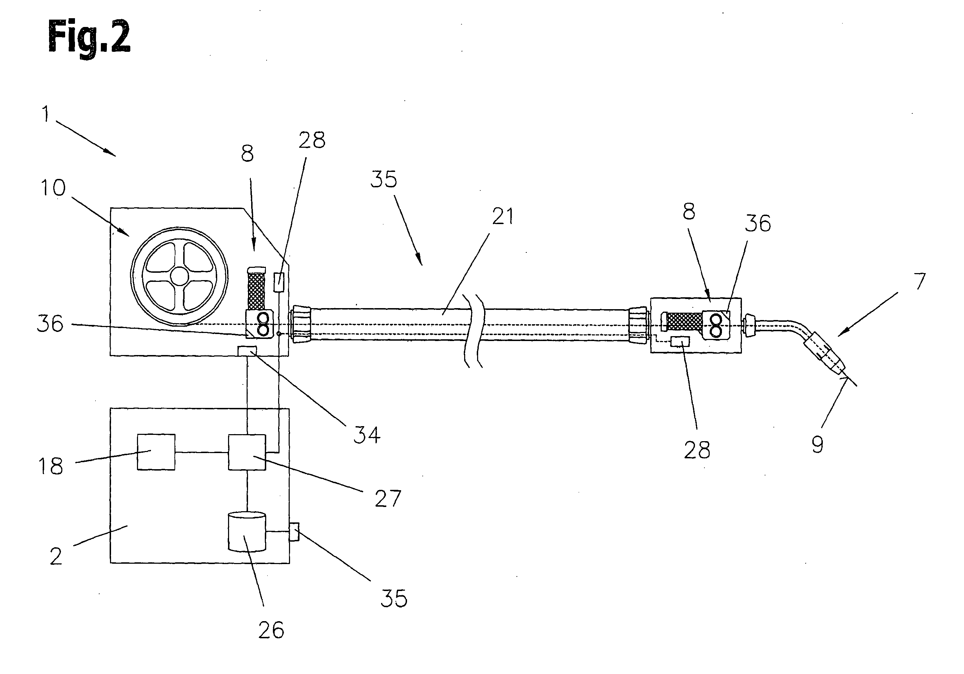

Fig. 2 zeigt schematisch eine Schweißvorrichtung 1 mit der erfindungsgemäßen Funktion der Ermittlung des Sollwerts pₛₒₗₗ des Anpressdrucks einer Drahtfördervorrichtung 8. Im dargestellten Ausführungsbeispiel befindet sich oberhalb der Stromquelle 2 der Schweißvorrichtung 1 eine Vorratstrommel 10, auf welcher der Schweißdraht 9 aufgewickelt ist. Über eine erste Fördervorrichtung 8 wird der Schweißdraht 9 durch ein Schlauchpaket 21 zum Schweißbrenner 7 geführt, wo eine weitere Fördervorrichtung 8 angeordnet sein kann. Im Schlauchpaket 21 kann gegebenenfalls ein Drahtpuffer (nicht dargestellt) angeordnet sein, welcher eine gewisse Menge an Schweißdraht 9 im Falle der Rückwärtsbewegung der im Schweißbrenner 7 befindlichen Fördervorrichtung 8 aufnehmen kann. Erfindungsgemäß ist nun eine Datenbank 26 vorgesehen, in der die Daten festgelegter Parameter Pᵢ zusammen mit Daten zusätzlicher bzw. weiterer Parameter P_{z} betreffend die Konfiguration der Schweißvorrichtung 1 zusammen mit den jeweiligen empirisch ermittelten Sollwerten pₛₒₗₗ des Anpressdrucks oder einer Rechenvorschrift zur Berechnung der jeweiligen Sollwerte pₛₒₗₗ des Anpressdrucks gespeichert sind. Die Datenbank 26 ist üblicherweise mit einer Recheneinrichtung 27, beispielsweise einem Mikroprozessor oder einem in der Stromquelle 2 der Schweißvorrichtung 1 bereits vorhandenen Recheneinrichtung verbunden. Über die Ein-/Ausgabeeinrichtung 18 der Schweißvorrichtung 1 oder eine eigene dafür vorgesehene Eingabeeinrichtung (nicht dargestellt) können die Daten der festgelegten Parameter Pᵢ und die Daten der zusätzlichen Konfigurationsparameter P_{z} eingegeben bzw. ausgewählt werden, worauf die entsprechenden Sollwerte pₛₒₗₗ des Anpressdrucks der Förderrollen der Fördervorrichtungen 8 aus der Datenbank 26 ermittelt und an einer oder mehreren Anzeigen 28 angezeigt werden. Im dargestellten Ausführungsbeispiel sind zwei Anzeigen 28 vorgesehen, welche jeweils in der Nähe der Fördervorrichtungen 8 angeordnet sind. Der Schweißer kann an den jeweiligen Anzeigen 28 den gewünschten Wert ablesen und an den Fördervorrichtungen 8 einstellen.

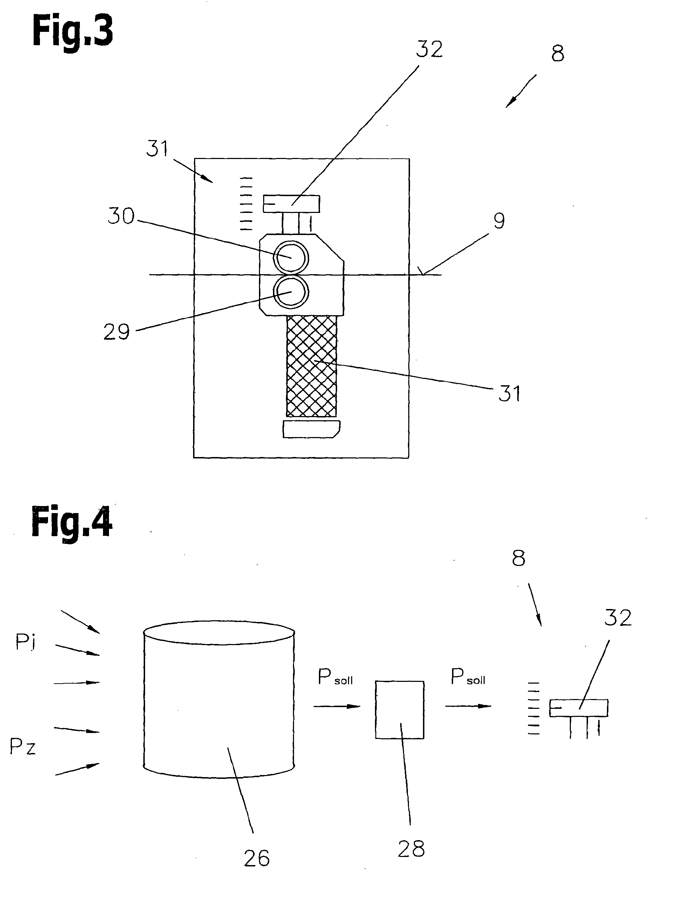

Unter Bezugnahme auf Fig. 3 wird eine Ausführungsform einer Fördervorrichtung 8 näher erläutert. Die Fördervorrichtung 8 besteht aus zwei Förderrollen 29, 30, von welchen eine Förderrolle 29, die sogenannte Antriebsrolle, mit Hilfe eines Antriebsmotors 31 angetrieben wird. Der Schweißdraht 9 wird zwischen den Förderrollen 29, 30 eingeklemmt und üblicherweise in Richtung Schweißbrenner 7 (nicht dargestellt) befördert. Um in Abhängigkeit des Materials und Durchmessers des Schweißdrahts 9 eine optimale Förderung des Schweißdrahts 9 erzielen zu können, wird eine Förderrolle 30, die sogenannte Druckrolle, mit einem entsprechenden gewünschten Anpressdruck pₛₒₗₗ gegen die Förderrolle 29 gepresst. Zum Einstellen des Anpressdrucks pₛₒₗₗ wird die Förderrolle 30 mit Hilfe eines entsprechenden Einstellorgans 32 zur Förderrolle 29 bzw. von dieser weg bewegt. Um die richtige Einstellung beobachten zu können ist üblicherweise eine entsprechende Skala 33 an der Fördervorrichtung 8 angeordnet. An der Anzeige 28 wird jener Wert angezeigt, welcher an der Skala 33 einzustellen ist. Es können auch Zwischenstufen an einer Skala 33 an der Anzeige 28 angezeigt werden, indem der Wert der Anzeige 28 an die Skala 33 angepasst wird. Beispielsweise kann eine einstellige Anzeige 28 von 1 bis 9 an eine Skala 33 von 1 bis 5 angepasst werden, sodass der angezeigte Wert 1 dem Wert 1 an der Skala und der angezeigte Wert 9 dem Wert 5 an der Skala 33 entspricht.

Gemäß Fig. 2 wird in der Nähe der jeweiligen Fördervorrichtung 8 der gewünschte Sollwert pₛₒₗₗ des Anpressdrucks angezeigt, worauf der Schweißer diesen mit Hilfe des Einstellorgans 32 an der Fördervorrichtung 8 einstellen kann. Anstelle zweier Anzeigen 28 kann auch nur eine Anzeige 28 vorgesehen sein, an der der Sollwert pₛₒₗₗ des Anpressdrucks beider Fördervorrichtungen 8 gleichzeitig oder abwechselnd angezeigt werden. Entsprechend können die Sollwerte pₛₒₗₗ des Anpressdrucks auch zentral an der Schweißvorrichtung 1 oder der Stromquelle 2 angezeigt werden. Auch der Zeitpunkt der Anzeige des Sollwerts pₛₒₗₗ des Anpressdrucks kann einstellbar sein. Beispielsweise kann der Sollwert pₛₒₗₗ des Anpressdrucks dann angezeigt werden, wenn eine definierte Taste, wie zum Beispiel eine Taste "Einfädeln" betätigt wird. In der erfindungsgemäßen Datenbank 26 sind somit sämtliche Kombinationen bzw. Konfigurationen der Schweißvorrichtung 1 als auch sämtliche andere Parameter, aufgrund welcher der Anpressdruck auf den Schweißdraht beeinflusst werden kann, zusammen mit den optimalen Anpressdruckwerten abgelegt. Nach Eingabe bzw. Auswahl der entsprechenden Daten der festgelegten Parameter Pᵢ und zusätzlichen Konfigurationsparametern P_{z} wird somit in rascher und fehlerloser Weise der optimale Sollwert pₛₒₗₗ der Fördervorrichtungen 8 ermittelt und an den Anzeigen 28 dargestellt. Um die Eingabe bzw. Auswahl der Daten der festgelegten Parameter Pᵢ bzw. Konfigurationsparameter P_{z} zu erleichtern, können Vorrichtungen 34 zur automatischen Erkennung der Daten der festgelegten Parameter Pᵢ und/oder Konfigurationsparameter P_{z} vorgesehen sein. Diese Erkennungsvorrichtungen 34 können beispielsweise durch einen Barcode-Leser gebildet sein. Auf diese Weise können festgelegte Parameter Pᵢ oder zusätzliche Konfigurationsparameter P_{z}, beispielsweise die Konfiguration der Schweißvorrichtung 1, automatisch erkannt und der Recheneinrichtung 27 bzw. Datenbank 26 zugeführt werden. Schließlich kann die Datenbank 26 bzw. die Recheneinrichtung 27 mit einer entsprechenden Schnittstelle 35 verbunden sein, über die die Daten der Datenbank 26 (beispielsweise bei einem Konfigurationswechsel) aktualisiert oder ergänzt werden können. Ein Konfigurationswechsel wird beispielsweise dann durchgeführt, wenn die Krümmung des Rohrbogens des Schweißbrenners 7, das Material des Schweißdrahts 9, der Vorratsbehälter (Fass oder Spule), die Länge des Schlauchpakets 21, usw. verändert wird. Die Fördervorrichtungen 8 bleiben unverändert, jedoch ändert sich durch den Wechsel der Konfiguration deren Beanspruchung, wodurch der Anpressdruck der Förderrollen 29, 30 auf den Schweißdraht 9 angepasst werden muss. Dadurch wird gewährleistet, dass der Anpressdruck nur so hoch wie unbedingt nötig eingestellt wird, um den Schweißdraht 9 nicht zu beschädigen und trotzdem eine sichere und stabile Förderung erreicht wird. Aus der Konfiguration ergeben sich also die erforderlichen Kräfte, welche die jeweilige Fördervorrichtung 8 auf den Schweißdraht 9 übertragen muss, um die gewünschte Menge an Schweißdraht 9 dem Schweißprozess zuzuführen und die Gegenkräfte - wie die Bremse des Vorratsbehälters - zu überwinden. Durch eine korrekte Einstellung des Anpressdrucks wird der Schweißdraht 9 nicht verformt, das Einfädeln des Schweißdrahts 9 erleichtert und es werden die Fördervorrichtungen 8 (in Bezug auf Reibungs- und Wärmeverluste) geschont und somit deren Lebensdauer erhöht.

Zusätzlich kann mit Hilfe einer Messeinrichtung 36 die tatsächliche Fördergeschwindigkeit des Schweißdrahts 9 erfasst werden. Zu diesem Zweck kann beispielsweise der Motorstrom Im der Antriebsmotoren 31 der Fördervorrichtungen 8 gemessen werden. Durch die Erfassung der entsprechenden Istwerte der Drahtförderung kann eine Regelung aufgebaut werden und auf einen Verschleiß insbesondere der Förderrollen 29, 30 der Fördervorrichtungen 8 Rücksicht genommen werden. Sollte es nämlich trotz Einstellung des optimalen Sollwerts pₛₒₗₗ des Anpressdrucks zu einem Durchrutschen des Schweißdrahts 9 kommen, was auf einen Verschleiß der Förderrollen 29, 30 schließen lässt, kann eine Korrektur des Anpressdrucks pₛₒₗₗ in gewissen Grenzen vorgenommen werden. Darüber hinaus kann der Istwert der Drahtförderung, beispielsweise der Motorstrom Iₘ des Antriebs 31 der Fördervorrichtung 8, auch mit vorgegebenen Schwellwerten verglichen und im Falle des Unter- oder Überschreitens der Schwellwerte eine optische oder akustische Alarmierung durchgeführt werden bzw. eine Nachjustierung des Anpressdrucks erfolgen.

Fig. 4 zeigt schließlich schematisch die Funktionsweise des erfindungsgemäßen Verfahrens zum Ermitteln eines Sollwerts pₛₒₗₗ für den Anpressdruck der Förderrollen 29, 30 zumindest einer Fördervorrichtung 8 für die Förderung eines Schweißdrahts 9 einer Schweißvorrichtung 1. Dabei werden in einer Datenbank 26 die Daten der festgelegten Parameter Pᵢ zusammen mit Daten von zusätzlichen Parametern P_{z} betreffend die Konfiguration der Schweißvorrichtung 1 zusammen mit den jeweiligen empirisch ermittelten Sollwerten pₛₒₗₗ des Anpressdrucks oder einer Rechenvorschrift zur Berechnung der jeweiligen Sollwerte pₛₒₗₗ des Anpressdrucks gespeichert. Der optimale gewünschte Sollwert pₛₒₗₗ des Anpressdrucks wird entsprechend dem Parameter Pᵢ und Konfigurationsparametern P_{z} ermittelt und an einer Anzeige 28 angezeigt. Dieser Wert wird vom Schweißer manuell mit Hilfe eines entsprechenden Einstellorgans 32 an der Fördervorrichtung 8 eingestellt. Theoretisch kann die Einstellung auch automatisch erfolgen wenn die Fördervorrichtung 8 über eine entsprechende Verstellmöglichkeit des Anpressdrucks verfügt. In diesem Falle wäre theoretisch die Anzeige des Sollwerts pₛₒₗₗ des Anpressdrucks der Fördervorrichtung 8 nicht zwingend erforderlich, jedoch für Kontrollzwecke zu empfehlen.

Die vorliegende Erfindung zeichnet sich durch eine besonders genaue Auswahl der jeweiligen Sollwerte pₛₒₗₗ für den Anpressdruck der Förderrollen 29, 30 der Fördervorrichtungen 8 und somit eine optimale Förderung des Schweißdrahts 9 und optimale Schweißqualität aus. Durch die Verwendung einer Datenbank 26 ist es für den Schweißer nicht mehr erforderlich in aufwändiger und fehleranfälliger Weise die Werte aus Tabellen oder Diagrammen auszulesen.

Bei Systemen mit mehreren Fördervorrichtungen 8 wird bevorzugt jeder Fördervorrichtung 8 eine eigene Anzeige 28 zugeordnet. Wie in Fig. 2 ersichtlich, ist hierzu eine Anzeige 28 in der Schweißvorrichtung 1 und eine weitere Anzeige 28 im Schweißbrenner 7 angeordnet. Werden jedoch noch weitere Fördervorrichtungen 8, wie es beispielsweise bei einem Zwischenantrieb in einem sehr langen Schlauchpaket 21 der Fall sein kann, eingesetzt, so ist auch für diese jeweils eine Anzeige 28 vorhanden. Bevorzugt wird die Anzeige 28 möglichst nahe bei der Fördervorrichtung 8 in der jeweiligen Komponente positioniert sein. Von Vorteil ist es, wenn für jede Fördervorrichtung 8 eine eigene Anzeige 28 verwendet wird, da die Fördervorrichtungen 8 bei Mehr-Antriebs-Systemen meist unterschiedliche Druckeinstellungen benötigen.

Beim sogenannten CMT (Cold Metal Transfer)-Schweißprozess werden beispielsweise zwei unterschiedliche Fördervorrichtungen 8 eingesetzt, wobei jene Fördervorrichtung 8 in der Schweißvorrichtung 1 für eine Förderrichtung ausgelegt ist und den Schweißdraht 9 in Richtung Schweißbrenner 7 fördert, wogegen die weitere Fördervorrichtung 8 im Schweißbrenner 7 für eine Vor-/Rückwärtsbewegung ausgebildet ist. Dadurch ergeben sich unterschiedliche Anforderungen an die beiden Fördervorrichtungen 8, sodass nach Erkennung der Konfiguration und Einstellung der Parameter automatisch die Sollwerte für den Anpressdruck der beiden Fördervorrichtungen 8 ermittelt und an den Anzeigen 28 dargestellt werden. Beispielsweise kann an der Anzeige 28 in der Schweißvorrichtung 1 ein Wert "7" und an der Anzeige 28 im Schweißbrenner 7 ein Wert "3" für den Anpressdruck angezeigt werden.

Selbstverständlich kann der Benutzer für spezielle Schweißeinstellungen diese mit dem jeweiligen Sollwert für den Anpressdruck der Fördervorrichtung 8 speichern und für spätere Schweißungen wieder abrufen. So kann der Benutzer spezielle Schweißeinstellungen vornehmen, die entsprechenden Werte für den Anpressdruck einer oder mehrerer Fördervorrichtungen 8 durch Schweißtests ermitteln und die gesamten Einstellungen speichern. Somit kann der Benutzer die häufigsten Schweißeinstellungen mit den häufigsten verwendeten Komponenten speichern.

Ein wesentlicher Vorteil dieses automatischen Systems liegt darin, dass für die Ermittlung der Werte auch Istwerte des Anpressdrucks berücksichtigt werden können. Beispielsweise kann für die Erfassung des Istwerts der Motorstrom der Fördervorrichtung 8 herangezogen werden, und der Istwert mit dem vorgegebenen Sollwert verglichen werden, und bei zu großer Abweichung eine Fehlermeldung ausgegeben werden. Somit kann der Benutzer gegebenenfalls für die nächste Schweißung eine Korrektur der Einstellungen vornehmen.

## Patentansprüche

1. Verfahren zum Ermitteln eines Sollwerts (pₛₒₗₗ) für den Anpressdruck von Förderrollen (29, 30) zumindest einer Vorrichtung (8) zur Förderung eines Schweißdrahts (9) einer Schweißvorrichtung (1), wobei der Sollwert (pₛₒₗₗ) des Anpressdrucks in Abhängigkeit festgelegter Parameter (Pᵢ) empirisch oder rechnerisch ermittelt und an der zumindest einen Fördervorrichtung (8) eingestellt wird, **dadurch gekennzeichnet, dass** als Daten der festgelegten Parameter (Pᵢ) das Material und der Durchmesser des Schweißdrahts (9) und allenfalls die Art der Förderrollen (29, 30) der Fördervorrichtung (8) verwendet werden und diese zusammen mit Daten von zusätzlichen Parametern (P_{z}) betreffend die Konfiguration der Schweißvorrichtung (1), nämlich die Anzahl und die Positionen der Fördervorrichtungen (8), die Art, Anzahl und Länge von Schlauchpaketen (21) zur Führung des Schweißdrahts (9) und/oder die Art der zumindest einen Fördervorrichtung (8), in einer Datenbank (26) zusammen mit den jeweiligen empirisch ermittelten Sollwerten (pₛₒₗₗ) des Anpressdrucks oder einer Rechenvorschrift zur Berechnung der jeweiligen Sollwerte (pₛₒₗₗ) des Anpressdrucks gespeichert sind, und der Sollwert (pₛₒₗₗ) des Anpressdrucks jeder Fördervorrichtung (8) in Abhängigkeit dieser festgelegten Parameter (Pᵢ) und zusätzlichen Konfigurationsparameter (P_{z}) aus der Datenbank (26) empirisch oder rechnerisch ermittelt und an zumindest einer Anzeige (28) angezeigt wird.

2. Verfahren nach Anspruch 1, **dadurch gekennzeichnet, dass** die Daten der festgelegten Parameter (Pᵢ) und/oder Konfigurationsparameter (P_{z}) über eine Eingabevorrichtung (18) eingegeben oder ausgewählt werden.

3. Verfahren nach Anspruch 1 oder 2, **dadurch gekennzeichnet, dass** die Daten der festgelegten Parameter (Pᵢ) und/oder Konfigurationsparameter (P_{z}) automatisch erkannt werden.

4. Verfahren nach einem der Ansprüche 1 bis 3, **dadurch gekennzeichnet, dass** der ausgewählte Sollwert (pₛₒₗₗ) des Anpressdrucks jeder Fördervorrichtung (8) in Abhängigkeit einer gemessenen Fördergeschwindigkeit (vᵢₛₜ) des Schweißdrahts (9), beispielsweise eines gemessenen Motorstroms (Iₘ) der Fördervorrichtung (8), korrigiert wird.

5. Verfahren nach Anspruch 4, **dadurch gekennzeichnet, dass** die Über- oder Unterschreitung von Schwellwerten der gemessenen Drahtfördergeschwindigkeit (vᵢₛₜ), beispielsweise des gemessenen Motorstroms (Iₘ) der Fördervorrichtung (8), optisch oder akustisch angezeigt wird.

6. Verfahren nach einem der Ansprüche 1 bis 5, **dadurch gekennzeichnet, dass** der Sollwert (pₛₒₗₗ) des Anpressdrucks jeder Fördervorrichtung (8) automatisch eingestellt wird.

7. Verfahren nach einem der Ansprüche 1 bis 6, **dadurch gekennzeichnet, dass** der Sollwert (pₛₒₗₗ) des Anpressdrucks jeder Fördervorrichtung (8) in Form eines Wertes zwischen 0 und 9 an der zumindest einen Anzeige (28) angezeigt wird.

8. Schweißvorrichtung (1) mit zumindest einer Förderrollen (29, 30) umfassenden Vorrichtung (8) zur Förderung eines Schweißdrahtes (9), wobei ein Sollwert (pₛₒₗₗ) des Anpressdrucks der Förderrollen (29, 30) jeder Fördervorrichtung (8) in Abhängigkeit festgelegter Parameter (Pᵢ) empirisch oder rechnerisch ermittelbar und an der zumindest einen Fördervorrichtung (8) einstellbar ist, **dadurch gekennzeichnet, dass** eine Datenbank (26) zur Speicherung von Daten der festgelegten Parameter (Pᵢ), nämlich dem Material und dem Durchmesser des Schweißdrahts (9) und allenfalls der Art der Förderrollen (29, 30) der Fördervorrichtung (8) zusammen mit Daten von zusätzlichen Parametern (P_{z}) betreffend die Konfiguration der Schweißvorrichtung (1), nämlich der Anzahl und der Positionen der Fördervorrichtungen (8), der Art, Anzahl und Länge von Schlauchpaketen (21) zur Führung des Schweißdrahts (9), und/oder der Art der zumindest einen Fördervorrichtung (8), zusammen mit den jeweiligen empirisch ermittelten Sollwerten (pₛₒₗₗ) des Anpressdrucks oder einer Rechenvorschrift zur Berechnung der jeweiligen Sollwerte (pₛₒₗₗ) des Anpressdrucks vorgesehen ist, und zumindest eine Anzeige (28) für den empirisch oder rechnerisch ermittelten Sollwert (pₛₒₗₗ) des Anpressdrucks jeder Fördervorrichtung (8) vorgesehen ist.

9. Schweißvorrichtung (1) nach Anspruch 8, **dadurch gekennzeichnet, dass** eine mit der Datenbank (26) verbundene Eingabevorrichtung (18) zur Eingabe oder Auswahl der Daten der festgelegten Parameter (Pᵢ) und/oder Konfigurationsparameter (P_{z}) vorgesehen ist.

10. Schweißvorrichtung (1) nach Anspruch 8 oder 9, **dadurch gekennzeichnet, dass** eine mit der Datenbank (26) verbundene Vorrichtung (34) zur automatischen Erkennung der Daten der festgelegten Parameter (Pᵢ) und/oder Konfigurationsparameter (P_{z}) vorgesehen ist.

11. Schweißvorrichtung (1) nach Anspruch 10, **dadurch gekennzeichnet, dass** die Erkennungsvorrichtung (34) durch einen Barcode-Leser gebildet ist.

12. Schweißvorrichtung (1) nach einem der Ansprüche 8 bis 11, **dadurch gekennzeichnet, dass** eine mit der Datenbank (26) verbundene Einrichtung (36) zur Messung der Fördergeschwindigkeit (vᵢₛₜ) des Schweißdrahts (9), beilspielsweise eine Einrichtung zur Messung des Motorstroms (Iₘ) der Fördervorrichtung (8), vorgesehen ist.

13. Schweißvorrichtung (1) nach Anspruch 12, **dadurch gekennzeichnet, dass** eine optische oder akustische Anzeigevorrichtung zur Anzeige der Über- oder Unterschreitung von Schwellwerten der gemessenen Drahtfördergeschwindigkeit (vᵢₛₜ), beispielsweise des gemessenen Motorstroms (Im), vorgesehen ist.

14. Schweißvorrichtung (1) nach einem der Ansprüche 8 bis 13, **dadurch gekennzeichnet, dass** jede Fördervorrichtung (8) eine Einrichtung zur automatischen Einstellung des Anpressdrucks aufweist.

15. Schweißvorrichtung (1) nach einem der Ansprüche 8 bis 14, **dadurch gekennzeichnet, dass** die Datenbank (26) mit einer Schnittstelle (35) verbunden ist.

16. Schweißvorrichtung (1) nach einem der Ansprüche 8 bis 15, **dadurch gekennzeichnet, dass** jede Anzeige (28) für den Sollwert (pₛₒₗₗ) des Anpressdrucks jeder Fördervorrichtung (8) durch eine einstellige Siebensegmentanzeige gebildet ist.

## Claims

1. A method for determining a setpoint value (pₛₑₜ) for the contact pressure of conveying rollers (29, 30) of at least one device (8) for conveying a welding wire (9) of a welding device (1), wherein the setpoint value (pₛₑₜ) of the contact pressure is determined empirically or by calculation depending on defined parameters (Pᵢ) and adjusted on the at least one conveying device (8), **characterized in that** the material and the diameter of the welding wire (9) and, possibly, the type of the conveying rollers (29, 30) of the conveying device (8) are used as data of the defined parameters (Pᵢ) and together with data from additional parameters (P_{z}) relating to the configuration of the welding device (1), namely the number and positions of conveying devices (8), the type, number and length of hose packages (21) for guiding the welding wire (9) and/or the type of the at least one conveying device (8) are stored in a database (26) together with the setpoint values (pₛₑₜ) of the contact pressure, determined in each case empirically, or a calculation rule for calculating the respective setpoint values (pₛₑₜ) of the contact pressure, and the setpoint value (pₛₑₜ) of the contact pressure of each conveying device (8) is determined empirically or by calculation depending on these defined parameters (Pᵢ) and additional configuration parameters (P_{z}) from the database (26) and is indicated on at least one display (28).

2. Method according to claim 1, **characterized in that** the data of the defined parameter (Pᵢ) and/or configuration parameters (P_{z}) are entered or selected via an input unit (18).

3. Method according to claim 1 or 2, **characterized in that** the data of the defined parameters (Pᵢ) and/or configuration parameters (P_{z}) are identified automatically.

4. Method according to one of claims 1 to 3, **characterized in that** the selected setpoint value (pₛₑₜ) of the contact pressure of each conveying device (8) is corrected depending on a measured conveying speed (vᵢₛₜ) of the welding wire (9), for example a measured motor current (Iₘ) of the conveying device (8).

5. Method according to claim 4, **characterized in that** the exceeding or falling below threshold values of the measured wire conveying speed (vᵢₛₜ), for example of the measured motor current (Iₘ) of the conveying device (8), is indicated optically or audibly.

6. Method according to one of claims 1 bis 5, **characterized in that** the setpoint value (pₛₑₜ) of the contact pressure of each conveying device (8) is adjusted automatically.

7. A method according to one of claims 1 to 6, **characterized in that** the setpoint value (pₛₑₜ) of the contact pressure of each conveying device (8) is displayed on the at least one display (28) in the form of a value between 0 and 9.

8. A welding device (1) having at least one device (8) comprising conveying rollers (29, 30) for conveying a welding wire (9), wherein a setpoint value (pₛₑₜ) of the contact pressure of the conveying rollers (29, 30) of each conveying device (8) can be determined empirically or by calculation depending on defined parameters (Pᵢ) and can be adjusted on the at least one conveying device (8), **characterized in that** a database (26) for storing data of the defined parameters (Pᵢ), namely the material and the diameter of the welding wire (9) and, if need be, the type of conveying rollers (29, 30) of conveying device (8) together with data of additional parameters (P_{z}) relating to the configuration of the welding device (1), namely the number and positions of conveying devices (8), the type, number and length of hose packages (21) for guiding the welding wire (9) and/or the type of the at least one conveying device (8) together with the setpoint values (pₛₑₜ) of the contact pressure, determined in each case empirically, or a calculation rule for calculating the respective setpoint values (pₛₑₜ) of the contact pressure is provided, and at least one display (28) for the setpoint value (pₛₑₜ) of the contact pressure of each conveying device (8) that is determined empirically or by calculation is provided.

9. A welding device (1) according to claim 8, **characterized in that** an input device (18) connected to database (26) is provided for entering or selecting the data of the defined parameters (Pᵢ) and/or configuration parameters (P_{z}).

10. A welding device (1) according to claim 8 or 9, **characterized in that** a device (34) connected to database (26) is provided for automatic identification of the data of the defined parameters (Pᵢ) and/or configuration parameters (P_{z}).

11. A welding device (1) according to claim 10, **characterized in that** the identification device (34) is formed by a barcode reader.

12. A welding device (1) according to one of claims 8 to 11, **characterized in that** a unit (36) connected to data base (26) for measuring the conveying speed (vᵢₛₜ) of welding wire (9), for example a unit for measuring the motor current (Iₘ) of the conveying device (8) is provided.

13. A welding device (1) according to claim 12, **characterized in that** an optical or audible indicating device for indicating the exceeding or falling below of threshold values of the measured wire conveying speed (vᵢₛₜ), for example the measured motor current (Iₘ) is provided.

14. A welding device (1) according to one of claims 8 to 13, **characterized in that** each conveying device (8) has a unit for automatic adjustment of contact pressure.

15. A welding device (1) according to one of claims 8 to 14, **characterized in that** the database (26) is connected to an interface (35).

16. A welding device (1) according to one of claims 8 to 15, **characterized in that** each display (28) for the setpoint value (pₛₑₜ) of contact pressure of each conveying device (8) is formed by a single-figure seven-segment display.

## Revendications

1. Procédé de détermination d'une valeur de consigne (pₛₒₗₗ) pour la pression d'application de rouleaux de convoyage (29, 30) d'au moins un dispositif (8) de convoyage d'un fil de soudure (9) d'un dispositif de soudure (1), la valeur de consigne (pₛₒₗₗ) de la pression d'application étant déterminée de manière empirique ou par calcul en fonction de paramètres (P₁) déterminés et étant réglée dans l'au moins un dispositif de convoyage (8), **caractérisé en ce que** les données des paramètres (P₁) déterminés sont le matériau et le diamètre du fil de soudure (9) et éventuellement le type des rouleaux de convoyage (29, 30) du dispositif de convoyage (8) et **en ce que** ces données sont enregistrées dans une base de données (26) avec les données de paramètres (P_{z}) supplémentaires concernant la configuration du dispositif de soudure (1), c'est-à-dire le nombre et les positions des dispositifs de convoyage (8), le type, le nombre et la longueur des paquets de gaines (21) pour le guidage du fil de soudure (9) et/ou le type de l'au moins un dispositif de convoyage (8), et avec les valeurs de consigne (pₛₒₗₗ), déterminées empiriquement, de la pression d'application ou avec une règle de calcul permettant de calculer les valeurs de consignes (pₛₒₗₗ) de la pression d'application, et **en ce que** la valeur de consigne (pₛₒₗₗ) de la pression d'application de chaque dispositif de convoyage (8) est déterminée, empiriquement ou par calcul, en fonction de ces paramètres (Pᵢ) déterminés et des paramètres de configuration (P_{z}) supplémentaires issus de la base de données (26) et affichée sur au moins un affichage (28).

2. Procédé selon la revendication 1, **caractérisé en ce que** les données des paramètres (Pᵢ) déterminés et/ou des paramètres de configuration (P_{z}) sont entrées ou sélectionnées par l'intermédiaire d'un dispositif d'entrée (18).

3. Procédé selon la revendication 1 ou 2, **caractérisé en ce que** les données des paramètres (Pᵢ) déterminés et/ou des paramètres de configuration (P_{z}) sont détectées automatiquement.

4. Procédé selon l'une des revendications 1 à 3, **caractérisé en ce que** la valeur de consigne (pₛₒₗₗ) sélectionnée de la pression d'application de chaque dispositif de convoyage (8) est corrigée en fonction d'une vitesse de convoyage mesurée (vᵢₛₜ) du fil de soudure (9), par exemple d'un courant de moteur mesurée (Iₘ) du dispositif de convoyage (8).

5. Procédé selon la revendication 4, **caractérisé en ce que** le dépassement ou le sous-passement de valeurs seuil de la vitesse de convoyage du fil (vᵢₛₜ), par exemple du courant de moteur mesuré (Iₘ) du dispositif de convoyage (8) est affiché de manière optique ou acoustique.

6. Procédé selon l'une des revendications 1 à 5, **caractérisé en ce que** la valeur de consigne (pₛₒₗₗ) de la pression d'application de chaque dispositif de convoyage (8) est réglée de manière automatique.

7. Procédé selon l'une des revendications 1 à 6, **caractérisé en ce que** la valeur de consigne (pₛₒₗₗ) de la pression d'application de chaque dispositif de convoyage (8) est affichée sous la forme d'une valeur entre 0 et 9 sur l'au moins un affichage (28).

8. Dispositif de soudure (1) pourvu d'au moins un dispositif (8) comprenant des rouleaux de convoyage (29, 30) pour le convoyage d'un fil de soudure (9), une valeur de consigne (pₛₒₗₗ) de la pression d'application des rouleaux de convoyage (29, 30) de chaque dispositif de convoyage (8) pouvant être déterminée empiriquement ou par calcul en fonction de paramètres (Pᵢ) déterminés et réglée dans l'au moins un dispositif de convoyage (8), **caractérisé en ce qu'**il est prévu une base de données (26) permettant d'enregistrer les données des paramètres (Pᵢ) déterminés, c'est-à-dire le matériau et le diamètre du fil de soudure (9) et éventuellement le type de rouleaux de convoyage (29, 30) du dispositif de convoyage (8), avec des données de paramètres supplémentaires (P_{z}) concernant la configuration du dispositif de soudure (1), c'est-à-dire le nombre et les positions des dispositifs de convoyage (8), le type, le nombre et la longueur des paquets de gaines (21) pour le guidage du fil de soudure (9), et/ou le type de l'au moins un dispositif de convoyage (8), et avec les valeurs de consigne (pₛₒₗₗ), de la pression d'application, déterminées empiriquement, ou une règle de calcul permettant de calculer les valeurs de consigne (pₛₒₗₗ) de la pression d'application, ainsi qu'au moins un affichage (28) pour la valeur de consigne (pₛₒₗₗ) de la pression d'application, déterminée empiriquement ou par calcul, de chaque dispositif de convoyage (8).

9. Dispositif de soudure (1) selon la revendication 8, **caractérisé en ce qu'**un dispositif d'entrée (18), relié à la base de données (26), est prévu pour l'entrée ou la sélection des données des paramètres déterminés (Pᵢ) et/ou des paramètres de configuration (P_{z}).

10. Dispositif de soudure (1) selon la revendication 8 ou 9, **caractérisé en ce qu'**un dispositif (34), relié à la base de données (26), est prévu pour la détection automatique des données des paramètres déterminés (Pᵢ) et/ou des paramètres de configuration (P_{z}).

11. Dispositif de soudure (1) selon la revendication 10, **caractérisé en ce que** le dispositif de détection (34) consiste en un lecteur de codes-barres.

12. Dispositif de soudure (1) selon l'une des revendications 8 à 11, **caractérisé en ce qu'**un dispositif (36), relié à la base de données (26), est prévu pour la mesure de la vitesse de convoyage (vᵢₛₜ) du fil de soudure (9), par exemple un dispositif de mesure du courant du moteur (Iₘ) du dispositif de convoyage (8).

13. Dispositif de soudure (1) selon la revendication 12, **caractérisé en ce qu'**un dispositif d'affichage optique ou acoustique est prévu pour l'affichage du dépassement ou du sous-passement de valeurs seuils de la vitesse de convoyage du fil mesurée (vᵢₛₜ), par exemple du courant du moteur mesuré (Iₘ).

14. Dispositif de soudure (1) selon l'une des revendications 8 à 13, **caractérisé en ce que** chaque dispositif de convoyage (8) comprend un dispositif permettant le réglage automatique de la pression d'application.

15. Dispositif de soudure (1) selon l'une des revendications 8 à 14, **caractérisé en ce que** la base de données (26) est reliée à une interface (35).

16. Dispositif de soudure (1) selon l'une des revendications 8 à 15, **caractérisé en ce que** chaque affichage (28) pour la valeur de consigne (pₛₒₗₗ) de la pression d'application de chaque dispositif de convoyage (8) consiste en un affichage sept segments à un chiffre.
